# EUROPEAN PATENT APPLICATION

(11) **EP 1 104 730 A2**
(43) Date of publication of application: **06.06.2001**
(21) Application number: 00310694.5
(22) Date of filing: 01.12.2000
(51) Int. Cl.: B60R 22/44

(54) **Seat belt retractor tension reducing mechanism**

(30) Priority: 02.12.1999 US 453746
(71) Applicant: Tensator Limited, Kingston, Milton Keynes MK10 0BH (GB)
(72) Inventor: Hishon, Michael Kenneth, New Baltimore, Michigan 48047 (US); Tomlinson, Andrew John, Kettering, Northamptonshire NN16 9ER (GB)
(74) Representative: Carpmael, John William Maurice

(57) **Abstract**

A seat belt retractor is provided which has gearing between a spindle (5) for the belt webbing (1) and the spring (9) which controls withdrawal of the belt webbing (1) from the casing (10) of the retractor. The gearing preferably comprises a spur gear (15) on the belt spindle (5), a further spur gear (23) on a stub shaft (11) for the spring and two further idler spur gears (17,19) integral with one another and meshing respectively with the first (15) and fourth (23) spur gears. By providing a reduction gearing, only a central portion of the working torque curve of the spring is used during the full retraction of the belt webbing (1) from the retractor.

## Description

This invention relates to a seat belt retractor with a tension reducing mechanism.

Nowadays, virtually all seat belts fitted to motor vehicles are of the spring loaded retractable type with the seat belt being stored within, and withdrawable from, a cassette (or casing), so that when it is not in use, the webbing and buckle of the belt do not lie on the vehicle seat, but are stored within the cassette. The cassette or casing includes a frame, which is adapted to be fixed to the vehicle, the frame including a base and sides, with a spindle for the length of webbing forming the belt being rotatably supported by the sides of the frame. A rewind spring is connected to an axial extension at one end of the spindle and to a spring cover, which is secured to one of the sides of the frame. The rewind spring acts between the spring cover and the axial extension of the spindle to bias the spindle to rotate in belt retraction or winding direction.

One of the disadvantages with known seat belt retractor mechanisms is that the force required to extract the seat belt from the cassette is too high and when a user has finished wearing the belt and releases it so that it retracts back into the cassette, the retraction force is too great. In other words, a rewind spring with enough force fully to stow the seat belt onto the spindle will have too high a force, which will cause discomfort due to excessive retraction force applied to the user's chest and shoulder. This excessive force also causes user discomfort by resisting belt extraction caused by normal forward and side movement of the user when using the belt in a vehicle. On the other hand, a rewind spring which has a retraction force low enough to provide comfort to the user will not have enough torque fully to stow the seat belt onto the spindle. A webbing of a seat belt system that is not fully stowed onto the spindle of the retractor mechanism can be damaged if the door of the vehicle is closed on it.

Normally, the rewind spring is in the form of a flat coiled spring known as a constant force extension spring, one end of which is secured to the axial extension of the spindle and the other end of which is secured to the interior of an outer wall of the casing. During the manufacture of the retractor mechanism, the spring is pre-tensioned by winding it upon itself and a conventional constant force extension spring generates its working torque in the upper half of the total number of winds on the spring. Within this working torque, there is a portion of the torque curve (obtained by plotting the number of turns against the spring force) where the torque rate change per spring turn is nearly constant. However, when the spring is operated in its residual range, i.e. at either end of the curve, early fatigue of the spring occurs. It is therefore desirable that, during use of the spring, only that part represented by the portion of the torque curve where the torque range change per spring turn is nearly constant, is used. This portion of the curve is virtually flat, i.e. the spring force is substantially constant as the spring is further loaded or, alternatively, released, that is, in the case of a seat belt, when the belt is pulled out or retracted by the spring. This flat portion of the spring torque curve is generally equivalent to approximately 10 spring turns of a conventional spring and is approximately central to the total number of working turns required for use on a seat belt retractor. It will be appreciated, however, that the actual number of spring turns within the flat portion of the torque curve depends directly on how long or short, thick or thin the spring is made.

In other words, if a conventional seat belt retractor incorporates the conventional rewind spring described above, it would use approximately 18 turns in total of the rewind spring within its full operating range of webbing extraction and retraction, that is approximately 4 spring turns before and approximately 4 spring turns after the flat portion of the spring torque curve, which would mean that the torque rate change per spring turn will increase and decrease significantly. This means that the conditions created as a result of the increase or decrease of the torque rate change are both insufficient to provide the retraction force necessary fully to stow the webbing and, in the other case, result in too high a retraction force for user comfort.

This means that the number of turns of the spring of a conventional mechanism in the portion of the spring torque curve, which is constant, is less than the usable number of turns on a retractor spindle necessary for full belt usage. A rewind spring of conventional design could be made to match the usable number of turns on the retractor spindle, but such a spring would not be practical since such a design would greatly exceed the packaging area for the retractor mechanism and would greatly increase the cost of the complete unit.

The present invention seeks to solve this problem and provide a seat belt retractor mechanism which only makes use of the flat portion of the spring torque curve of the spring used for retracting the belt webbing.

It is therefore one object of the present invention to create a seat belt retractor mechanism which has a rewind system providing minimum extraction and retraction forces, thus contributing to user comfort.

It is another object of the present invention of create a seat belt retractor mechanism with a rewind system that provides sufficient retraction force fully to stow the seat belt when not in use.

A further object of the present invention is to provide a gear reduction system which provides a mechanical advantage for extraction of the webbing and a reduction of the retraction force in a seat belt retractor.

According to the present invention, we provide a seat belt retractor comprising a casing, a central spindle rotatably mounted within the casing, a length of belt webbing wound upon the spindle, and having a free end thereof extending through an aperture in the wall of the casing, spring means acting upon the spindle so as to bias the spindle to rotate in a direction resisting withdrawal of the length of belt webbing thereon, and gear means located between the spindle and spring means to reduce the influence of the spring means on the spindle.

Preferably, the spring means is a flat spring known as a constant force extension spring wound around a stub shaft coaxial with the spindle, one end of the flat spring being connected to the stub shaft and the other end being connected to the casing. In one construction the gear means comprises a first spur gear rotatable with the spindle, a second spur gear meshing with the first spur gear and rotatably supported on the casing, a third spur gear rotatable with the second spur gear, and having less teeth than the second spur gear, and a fourth spur gear rotatable with the stub shaft and meshing with the third spur gear.

Preferably, the third and fourth spur gears have the same number of teeth.

The fourth spur gear may be rotatably supported on the first spur gear.

The second and third spur gears may be formed in one piece and may form a snap-fit on a deformable spigot on the casing.

Preferably, the first spur gear has 20 teeth, the second spur gear has 30 teeth, and each of the third and fourth spur gears has 25 teeth. This produces a 66.6% reduction.

It will be appreciated that alternative constructions of gear means could be used. For example, instead of using four spur gears, two spur gears could be used, with one or more idler gears with internal gear teeth located between them, or a planetary gear system could be used with fixed planet gears, or with planet gears mounted on a rotating carrier.

By using the gear means described above, it is possible to target the flat portion of the spring torque curve so as to provide sufficient working turns for full extraction and retraction of the length of webbing on the seat belt retractor, and so as to provide sufficient retraction force fully to stow the seat belt webbing in the retractor and so as to provide low retraction force for user comfort when in use.

A seat belt retractor with a tension reducing mechanism according to the present invention is now described by way of example with reference to the accompanying drawings in which:
- FIGURE 1: is a graph showing the behaviour of a flat or constant force extension spring such as that used in a seat belt retractor,
- FIGURE 2: is a section through a seat belt retractor incorporating a tension reducing mechanism in accordance with the present invention.

In a traditional seat belt retractor, the webbing of the seat belt is wound upon a spindle located within a casing and the spindle is biased by a constant force extension spring, such as a TENSATOR® or like spring so as to cause withdrawal of the majority of the seat belt into the casing when not in use. When a user wishes to use the seat belt, the belt is withdrawn from the casing against a torque provided by the spring. Constant force extension springs are flat strap-like spring steel springs which are wound spirally upon themselves with the inner end of the straplike piece of spring steel being secured to a shaft and the outer end being secured to a casing within which the shaft is rotatable. Normally, the springs are preassembled to a certain torque and are fitted to the seat belt retractor in known manner, e.g. by means of a spigot on the spring shaft locating within a hollow end of the belt spindle or vice versa or by means of a splining arrangement, so that the spring shaft becomes an axial extension of the belt spindle.

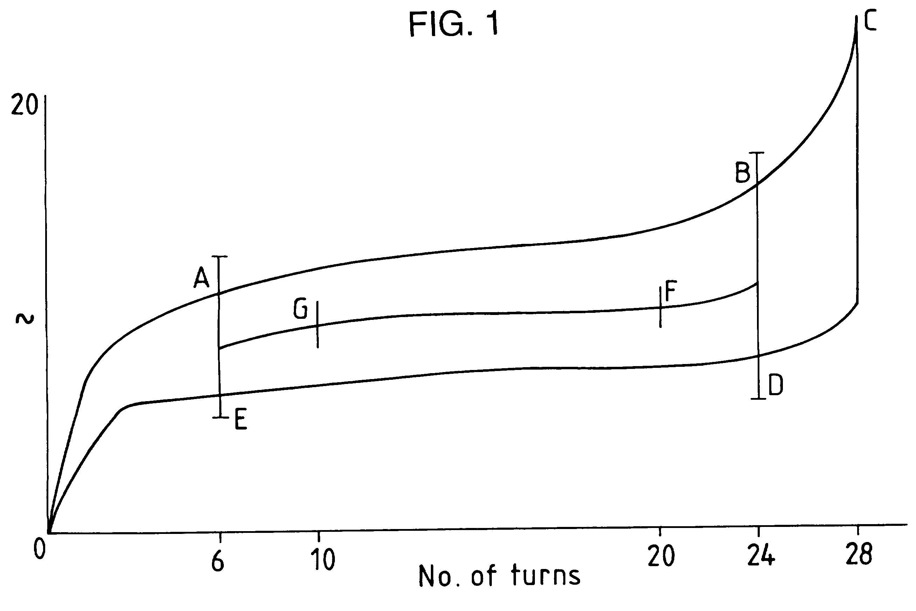

Figure 1 is a plot showing the performance of a typical such spring used with a seat belt retractor and along the X axis the number of turns by which the spring is loaded during use is indicated, whereas along the Y axis, the torque provided by the spring is indicated. As can be seen from Figure 1, during the first few turns as the spring is loaded, represented by part OA of the curve, the torque provided by the spring increases substantially (e.g. for up to about 6 turns of the spring). Thereafter, as the spring is loaded further, there is a relatively minor increase in the torque provided by the spring which is represented by the relatively flat portion AB of the curve. This portion could represent the next 14 turns of the spring. Subsequent to this, as the spring is tightened fully, the torque provided by the spring increases substantially and this portion is represented by part BC of the curve, e.g. after a further 4 turns. At this stage, the spring is fully loaded. When the spring is then allowed to relax, there is initially an immediate drop in spring torque followed by a fairly steep drop in the torque as the first few return turns of the spring occur. This portion is represented by the part CD of the curve. As the spring is then relaxed further, the torque remains largely constant and this portion of the curve is represented by the part DE. Thereafter, as the spring is allowed completely to relax, there is a substantial falling-off of the spring torque until zero torque is reached. This is represented by the portion EO of the curve.

With a normal seat belt retractor, that portion of the working torque curve represented by the parts AB, DE is normally used since this portion of the working torque curve provides a largely uniform spring torque both during withdrawal of the belt from the retractor, which results in loading up of the spring over the section AB of the graph, and during retraction of the belt, which results in the release of the spring and is represented by the portion DE of the working torque curve. It is noticeable, however, that even in this known arrangement, the torque applied by the spring is not constant in that approximately from turns 6 to 10 of the spring, there is a fairly sharp increase in the torque provided by the spring during withdrawal of the belt and that, during turns 20 to 24, this increase is more pronounced. Likewise, during belt retraction, there is a similar decrease at each end of the retraction movement.

As can be seen from Figure 1, typically a conventional seat belt retractor will use approximately 18 total turns of its rewind spring within its full operating range of webbing extraction and retraction. The first 6 winds, 0 to 6 shown in the curve, represent the preloading applied to the spring, whereas the last 4 turns would not normally have to be used. As can be seen from Figure 1, the flattest portion of the working torque curve is available between approximately turns 10 and 20. This flattest portion is flattest both during belt withdrawal and belt retraction but, unfortunately, due to space limitations, sufficiently large springs to enable only 10 turns of the spring to be used during operation of the seat belt retractor are not practical.

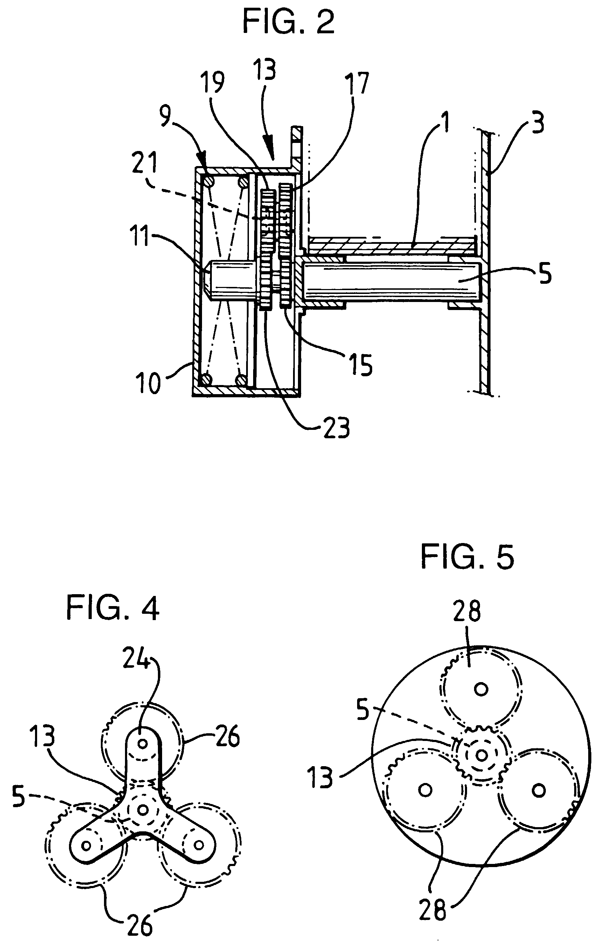

The present invention allows a conventional size of spring to be used with a conventional length of belt webbing. Referring now to Figure 2, a length of belt webbing 1 is shown wound upon itself upon a traditional spool 3 in a cassette (not shown). The outer end of the webbing 1 will extend, in use, out of the cassette for connection to an appropriate buckle, whereas the inner end of the webbing will be secured in known manner to an internal spindle 5 rotatable with the spool 3. The spool 3 is rotatable between the side walls of a frame (not shown), a base of which would be secured to a vehicle.

In a traditional seat belt retractor mechanism, an axial extension of the spindle 5 projects outwardly through one side wall of the cassette frame and is engaged with a pretensioned spring mechanism, e.g. a constant force extension spring which provides a suitable torque against which the webbing 1 is withdrawn. In accordance with the present invention, the spring mechanism which is indicated generally at 9 and which incorporates a constant force extension spring, such as a TENSATOR® type spring, wound upon an internal stub shaft 11 with its inner end secured to the shaft 11 and its outer end secured to the interior of the wall of the casing 10, is connected to the spindle 5 by gear means shown generally at 13. For this purpose, the casing of the spring means 9 is lengthened to incorporate the gear means 13. The gear means 13 comprises a first spur gear 15 keyed to an extension of the spindle 5 which meshes with a second spur gear 17. The spur gear 17 is connected to a third spur gear 19 which rotates therewith and these two spur gears 17 and 19 are preferably formed in one and mounted for rotation on a deformable spigot 21 supported on one of the walls of the casing 3. The third spur gear 19 meshes with a fourth spur gear 23 which is keyed to the stub shaft 11 on which the spring is mounted. Accordingly, rotation of the spindle 5 will cause rotation of the two spur gears 17 and 19 in the opposite direction which, in turn, will cause rotation of the fourth spur gear 23. Depending upon the number of teeth on the various spur gears, so the number of rotations of the stub shaft 11 for each rotation of the spindle 5 can be dictated. In the preferred arrangement, a gearing down of about 33% is preferred so that for 30 turns of the spindle 5 there will be 20 turns of the stub shaft 11. This can be achieved by providing 20 teeth on the first spur gear 15, 30 teeth on the second spur gear 17, and 25 teeth on each of the spur gears 19 and 23. This means that, instead of using the normal 18 total turns of the spring, only about 12 are used for 18 rotations of the spindle 5. This allows just the central portion of the working torque curve of the spring curve shown in Figure 1 to be used. This central portion is represented by the line FG in Figure 1.

Obviously, the ratio of the gear means can be selected by changing the number of teeth on the four spur gears.

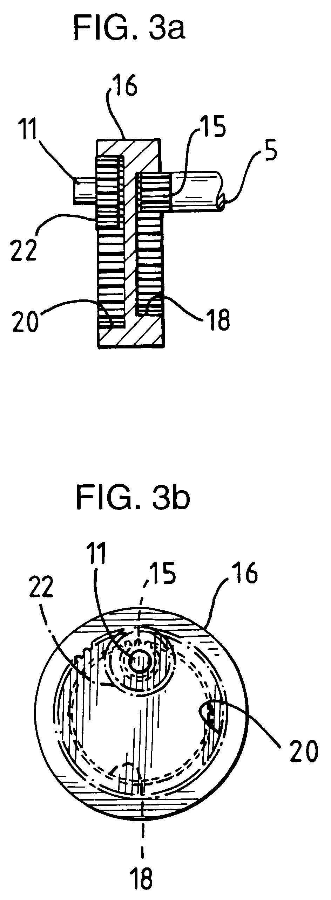

Instead of using the gear means 13 shown in Figure 2, alternative constructions of gear means, such as those shown in Figures 3a and 3b, or Figure 4 or Figure 5 could be used.

In the Figure 3a and 3b construction, the first spur gear 13 on the spindle 5 meshes with an idler gear 16 having two sets 18,20 of internal gear teeth (which differ in number). The set 20 of gear teeth mesh with a spur gear 22 which drives the stub shaft 11 to which the spring is connected.

In the Figure 4 construction, the spindle 5 drives a spider 24 of a planetary gear train having three planet gears 26 which drive the stub shaft 11 in known manner.

In the Figure 5 construction, the first spur gear 13 on the spindle 5 meshes with three planet gears 28 of a planetary gear train, which gears 28 are mounted on a rotatable carrier 30 which is connected to the stub shaft 11.

It will of course be appreciated that each of the above described gear reduction systems could be provided with any desired gear ratio between the input spur or pinion gear 13 and the output gear driving the stub shaft 11.

By using one of the above described gearing arrangements, the tension in the belt during use is reduced slightly and only the central portion of the working torque curve need be used. This is particularly advantageous since it means that a largely constant torque will be applied to the belt webbing at all times, i.e. throughout the whole of the withdrawal of the belt and during the whole of the retraction cycle.

Accordingly, the present invention provides a seat belt retractor with lower extraction forces and lower retraction forces than are found on traditional retractors. Furthermore, there is sufficient retraction force fully to stow the seat belt webbing at ambient temperature within approximately 6 seconds. Furthermore, because the spring is only used over a central portion of its working torque curve, spring life is substantially increased. In this respect, it is well known that when a spring is operated in its residual range, i.e. over the ranges OA, EO and BC, CD in Figure 1, you get early fatigue. This does not happen with the present invention. As a result, it is possible, instead of substantially increasing spring life, to use a less expensive spring than with traditional retractor mechanisms and yet still obtain greater spring life.

Hence, the present invention provides a gear reduction system where the number of spool rotations is proportional to the number of spring turns where the usable number of spool rotations operates within the flattest portion of the spring torque curve maintaining sufficient retraction force to fully retract the seat belt.

It will of course be understood that the present invention has been described above purely by way of example, and modifications of detail can be made within the scope of the invention.

## Claims

1. A seat belt retractor comprising a casing (10), a central spindle (5) rotatably mounted within the casing (10), a length of belt webbing (1) wound upon the spindle (5) and having a free end thereof extending through an aperture in the wall of the casing, spring means (9) acting upon the spindle (5) so as to bias the spindle to rotate in a direction resisting the withdrawal of the length of belt webbing (1) thereon, characterised in that gear means (13) is located between the spindle (5) and spring means (9) to reduce the influence of the spring means (9) on the spindle (5).

2. A seat belt retractor according to claim 1, wherein the spring means (9) is a constant force extension spring wound around a stub shaft (11) coaxial with the spindle (5), one end of the spring being connected to the stub shaft (11) and the other end being connected to the casing (10).

3. A seat belt retractor according to claim 2, wherein the gear means (13) comprises a first spur gear (15) rotatable with the spindle (5), a second spur gear (17) meshing with the first spur gear (15) and rotatably supported on the casing (10), a third spur gear (19) rotatable with the second spur gear (17) and having less teeth than the second spur gear (17), and a fourth spur gear (23) rotatable with the stub shaft (11) and meshing with the third spur gear (19).

4. A seat belt retractor according to claim 2 or 3, wherein the third and fourth spur gears (19, 23) have the same number of teeth.

5. A seat belt retractor according to claim 2, 3 or 4, wherein the fourth spur gear (23) is rotatably supported on the first spur gear (15).

6. A seat belt retractor according to claim 2, 3, 4 or 5, wherein the second and third spur gears (17, 19) are formed in one piece.

7. A seat belt retractor according to claim 6, wherein the second and third spur gears (17, 19) form a snap-fit on a deformable spigot (21) on the casing (10).

8. A seat belt retractor according to any one of claims 3 to 7, wherein the first spur gear (15) has 20 teeth, the second spur gear (17) has 30 teeth, and each of the third and fourth spur gears (19, 23) has 25 teeth.
